**Europäisches Patentamt**

**European Patent Office**

**Office européen des brevets**

(19)

(11) Publication number: **0 102 373**
**B1**

# (12) EUROPEAN PATENT SPECIFICATION

(45) Date of publication of patent specification: **25.03.87**

(21) Application number: **83900846.3**

(22) Date of filing: **22.02.83**

(86) International application number:
**PCT/GB83/00053**

(87) International publication number:
**WO 83/03016 01.09.83 Gazette 83/20**

(51) Int. Cl.⁴: **G 05 B 19/04**

(54) **STEP SEQUENCE CONTROL APPARATUS.**

(30) Priority: **26.02.82 GB 8205654**

(43) Date of publication of application:
**14.03.84 Bulletin 84/11**

(45) Publication of the grant of the patent:
**25.03.87 Bulletin 87/13**

(84) Designated Contracting States:
**DE FR**

(56) References cited:
**EP-A-0 024 564**
**GB-A-2 067 307**

**Patents Abstracts of Japan, vol. 6, nr. 53, 8
April 1982, page 109 (931)
D.G. Larsen et al.: "The Bugbook III", 1975, E & L
Instruments (Derby, US) pages 2-20 to 2-28**

(73) Proprietor: **SQUARE D COMPANY**
**Executive Plaza**
**Palatine, IL 60067 (US)**

(72) Inventor: **HIGGINS, Leslie John**
**21 Clifton Street**
**Swindon Wiltshire (GB)**
Inventor: **COPE, David John**
**Clef House Shaw**
**Swindon Wiltshire (GB)**

(74) Representative: **Wotherspoon, Graham et al**
**FITZPATRICKS 4 West Regent Street**
**Glasgow G2 1RS Scotland (GB)**

Courier Press, Leamington Spa, England.

## Description

This invention relates to electrical step sequence control apparatus.

Step sequence controllers are well known. Such units energize a selected one or more of a set of outputs at a time, and progress through a predetermined sequence of outputs, stepping through the sequence either on a time basis or in response to predetermined inputs. Of recent years step sequence controllers have become more flexible in application by use of digital electronics and microprocessors. However, this has been at the expense of increased complexity in fault-finding and diagnostics, and increased difficulty for relatively unskilled personnel in monitoring operation of the sequencer.

JP—A—55 180 760 discloses a step sequence controller which includes two visual indicators. One of these displays an output state. The other displays, selectively, an input state or the state of internal flags, the selection being made by a special key.

The present invention, which is defined in claim 1, provides a step sequence controller which has a novel display arrangement of simple construction which allows easy monitoring and fault finding.

An embodiment of the invention will now be described, by way of example only, with reference to the drawings, in which:—

Fig. 1 is a diagrammatic perspective view of a step sequencer embodying the invention;

Fig. 2 is a block diagram of the step sequencer; and

Fig. 3 shows part of Fig. 2 in greater detail.

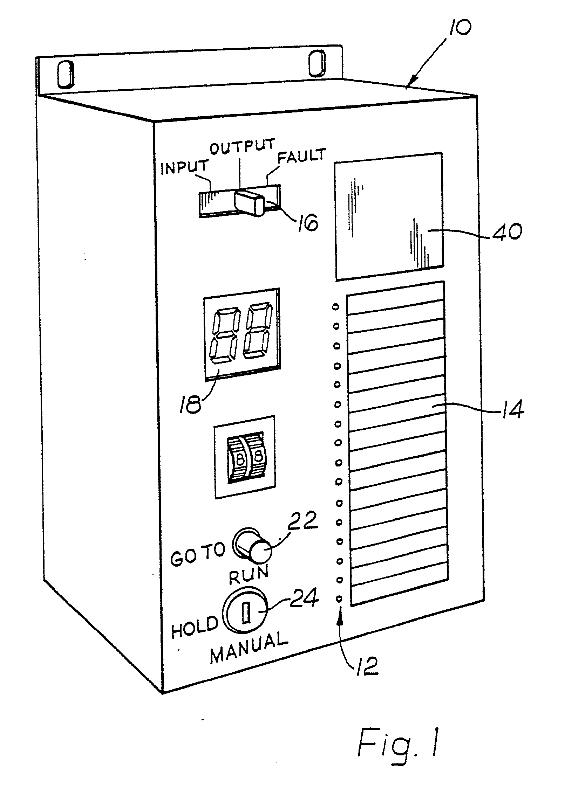

Referring to Fig. 1, the controller is housed in a general rectangular cabinet 10. On the face furthest from view are provided connections for 16 inputs, 16 outputs and a connection to a remote display. Operator controls and indicators are arranged on the front face of the cabinet. Sixteen LEDs 12 arranged in a vertical row have adjacent labels 14 on which names of respective inputs and/or outputs may be inscribed. A three-position display mode switch 16 is operable to cause the LEDs 12 to display a desired input condition, output condition or fault, as will be described. A two-digit eight-bar display 18 displays the current step, sequences of up to 99 steps being possible. A two-digit thumbwheel switch 20 may be used in conjunction with a GO TO button 22 to select a particular step. A three-position operation mode switch 24, suitably a key switch, allows selection of RUN, HOLD or MANUAL modes.

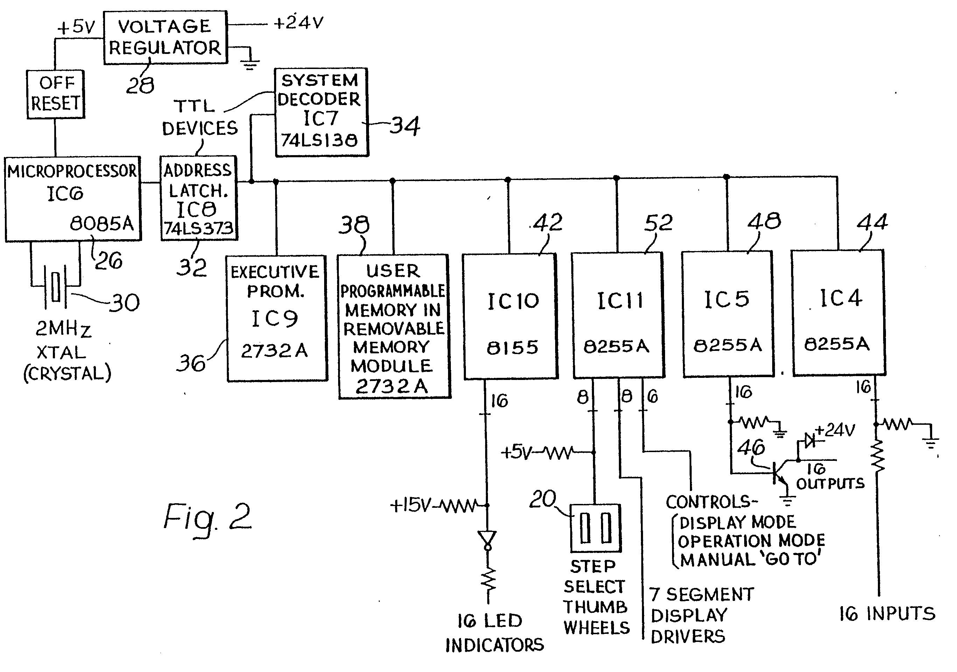

Referring to Fig. 2, the controller is based on a microprocessor 26 with which are associated power supply 28, 2 MHz crystal clock 30, address latch 32 and system decoder 34. These items are conventional and thus will not be further described. The processor 26 is suitably an Intel 8085A, the system decoder 34 a Texas Instruments 74LS138, and the address latch 32 a Texas Instruments 74LS373. Standard executive software is held in PROM 36. A further memory 38 is in the form of a removable UV-erasable PROM module which may be programmed for a specific control system by the user on commercially available PROM programming equipment, the module being inserted in the housing 10 at location 40 (Fig. 1). The sixteen LEDs 12 are driven by the processor 26 via interface circuit 42. Input conditions are interfaced to the processor 26 via circuit 44.

The sixteen outputs, one of which is shown in Fig. 2, are energised by the processor 26 via interface 48. Each output includes a switching transistor 46 suitable for controlling industrial loads via a relay, solenoid or solid-state power switch.

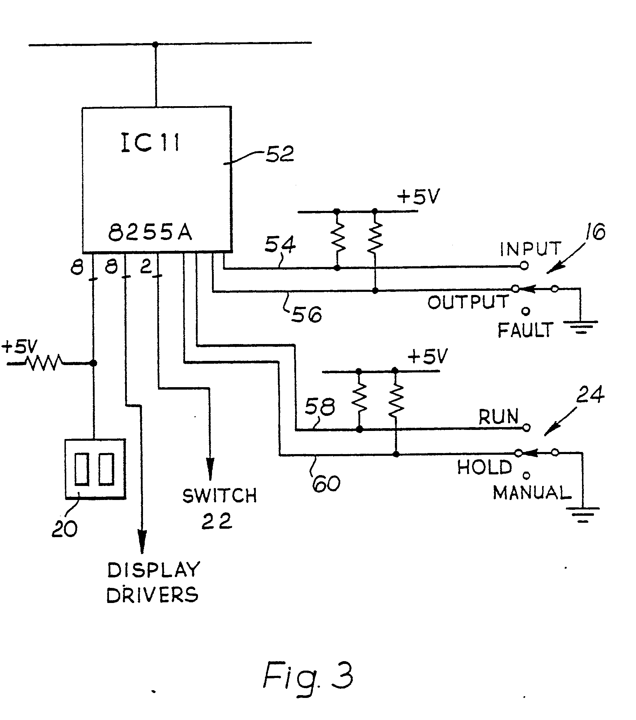

The two-digit display 18 and the operator controls are interfaced with the processor 26 via circuit 52. The arrangement of the controls 16, 22, 24 is shown in greater detail in Fig. 3. The display mode select switch 16 is arranged to give a logic high signal on line 54 when INPUT is selected, a logic high signal on line 56 when OUTPUT is selected, and neither of these when FAULT is selected. In a similar manner, the operation mode switch 24 gives a logic high signal on line 58 when RUN is selected, a logic high signal on line 60 when HOLD is selected, and neither of these when MANUAL is selected.

The operation mode switch 24 is operative such that when RUN is selected the controller cycles through the step sequence in accordance with the program information defined in PROM 38, when HOLD is selected the controller maintains the current step, and when MANUAL is selected the operator can choose a step by operation of the switches 20 and 22.

The form of display given by the LEDs 12 is determined by the display mode switch 16. When INPUT is selected, the LEDs corresponding to those inputs where a signal is present are illuminated. When OUTPUT is selected, the LEDs corresponding to the activated outputs are illuminated. When FAULT is selected, those LEDs are illuminated which correspond to inputs where an input signal is required for the current step but is not present. It will be appreciated that, since inputs and outputs are defined in logic "on" and "off" states, these displays can readily be generated by suitable comparisons effected by the processor 26, without difficulty to those skilled in the art.

In the particular embodiment shown in Fig. 2, the interface circuits 44, 48, 52 are suitably Intel type 8255A integrated circuit programmable peripheral interfaces. The interface circuit 42 is suitably an Intel type 8155 programmable peripheral interface with RAM and timer; the RAM is used as the system read/write memory and the timer supplies the main system time base. Naturally, many other standard circuits are equally suitable.

The invention thus provides a simple form of display which can be used to monitor the operation of the controller, and which can also be used in a simple manner to trace faults which have caused interruption of normal operation.

## Claims

1. A step sequence control apparatus having *n* inputs and *m* outputs and display means comprising switchable light sources; characterised in that said display means is a single display (14) having a number of light sources (12) equal in number to the greater of *n* and *m;* and further characterised by manually operable switch means (16) for selectively causing the light sources (12) to respond to (1) the current state of the respective inputs, or (2) the current state of the respective outputs, or (3) the difference between the current inputs and the inputs required by the current step.

2. The apparatus of claim 1, in which the light sources (12) are LEDs arranged in a row.

3. The apparatus of claim 1 or claim 2, in which the switch means (16) is a three-position switch.

4. The apparatus of any preceding claim, including sequence control means having memory means (38) defining a desired sequence of output signals, and including manually operable input means (24) operable to select "Run", "Hold" and "Manual" modes, the "Run" mode causing the sequence control means to cycle through said sequence, the "Hold" mode causing the sequence control means to remain in its present state, and the "Manual" mode permitting manual selection of a desired point in the sequence.

## Patentansprüche

1. Schrittfolgesteuergerät mit n-Eingängen und m-Ausgängen sowie mit schaltbare Lichtquellen aufweisenden Anzeigemitteln, dadurch gekennzeichnet, daß die Anzeigemittel durch eine einzige Anzeigeeinrichtung (14) gebildet sind, die eine dem jeweils größeren Zahlenwert von n und m gleiche Anzahl von Lichtquellen (12) aufweist; und weiterhin gekennzeichnet durch handbetätigbare Schaltmittel (16), um die Lichtquellen (12) wahlweise auf (1) den gegenwärtigen Zustand der Eingänge oder (2) den gegenwärtigen Zustand der Ausgänge oder (3) den Unterschied zwischen dem Zustand der Eingänge und dem von dem gegenwärtigen Schritt geforderten Zustand der Eingänge ansprechen zu lassen.

2. Gerät nach Anspruch 1, bei dem die Lichtquellen (12) in einer Reihe angeordnete Leuchtdioden (LED) sind.

3. Gerät nach Anspruch 1 oder 2, dadurch gekennzeichnet, daß die Schaltmittel (16) durch einen drei Schaltstellungen aufweisenden Schalter gebildet sind.

4. Gerät nach einem der vorhergehenden Ansprüche mit Ablaufsteuerungsmitteln, die Speichermittel (38) aufweisen, welche eine jeweils gewünschte Folge von Ausgangssignalen bestimmen sowie mit handbetätigbaren Eingabemitteln (24), durch die Betriebszustände "Lauf", "Halt" und "Hand" wählbar sind, wobei in dem Betriebszustand "Lauf" die Ablaufsteuerungsmittel veranlaßt werden, die erwähnte Folge zu durchlaufen, in dem Betriebszustand "Halt" die Ablaufsteuerungsmittel veranlaßt werden, in ihrem jeweiligen augenblicklichen Zustand zu verbleiben und in dem Betriebszustand "Hand" die von Hand erfolgende Auswahl einer jeweils gewünschten Stelle in dieser Folge ermöglicht ist.

## Revendications

1. Dispositif de commande de séquence de pas comportant *n* entrées et *m* sorties et des moyens d'affichage comprenant des sources de lumière commutables, caractérisé en ce que les moyens d'affichage constituent un affichage unique (14) comprenant un nombre de sources de lumière (12) égal au nombre le plus grand des valeurs *n* et *m*; et caractérisé en outre par des moyens de commutation (16) manoeuvrables manuellement de sorte que les sources de lumière (12) répondent sélectivement à 1) l'état en cours des entrées respectives, ou 2) l'état en cours des sorties respectives, ou 3) la différence entre les entrées en cours et les entrées requises par le pas en cours.

2. Appareil suivant la revendication 1, dans lequel les sources de lumière (12) sont des diodes électroluminescentes alignées.

3. Appareil suivant la revendication 1 ou la revendication 2, dans lequel les moyens de commutation (16) comprennent un commutateur à trois positions.

4. Appareil suivant l'une quelconque des revendications précédentes, comprenant des moyens de commande de séquence qui comportent des moyens de mémoire (38) définissant une séquence désirée de signaux de sortie, et comprenant des moyens d'entrée manoeuvrables manuellement (24) qui permettent la sélection de modes "Marche", "Maintien" et "Manuel", le mode "Marche" provoquant la progression des moyens de commande de séquence suivant ladite séquence, le mode "Maintien" provoquant le maintien des moyens de commande de séquence dans leur état en cours et le mode "Manuel" permettant la sélection manuelle d'un point désiré dans la séquence.

Fig. 1

Fig. 2

Fig. 3